(19) Europäisches Patentamt
European Patent Office
Office européen des brevets

(11) Veröffentlichungsnummer: **0 012 712**
**B1**

(12) # EUROPÄISCHE PATENTSCHRIFT

(45) Veröffentlichungstag der Patentschrift: **08.09.82**

(51) Int. Cl.³: **C 08 G 69/26**

(21) Anmeldenummer: **79810124.2**

(22) Anmeldetag: **12.10.79**

(54) **Transparente Polyamide, Verfahren zu deren Herstellung und deren Verwendung zur Herstellung von Formkörpern.**

(30) Priorität: **18.10.78 CH 10771/78**

(43) Veröffentlichungstag der Anmeldung: **25.06.80 Patentblatt 80/13**

(45) Bekanntmachung des Hinweises auf die Patenterteilung: **08.09.82 Patentblatt 82/36**

(84) Benannte Vertragsstaaten: **CH DE FR GB IT NL**

(56) Entgegenhaltungen:
DE-A-2 846 514
DE-B-1 295 830
US-A-3 563 959

(73) Patentinhaber: **CIBA-GEIGY AG, Patentabteilung Postfach, CH-4002 Basel (CH)**

(72) Erfinder: **Pfeifer, Josef, Dr., Brunnmattstrasse 32, CH-4106 Therwil (CH)**
Erfinder: **Reinehr, Dieter, Dr., Wolfsheule 10, D-7842 Kandern (DE)**

**EP 0 012 712 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Transparente Polyamide, Verfahren zu deren Herstellung und deren Verwendung zur Herstellung von Formkörpern

Die vorliegende Erfindung betrifft neue transparente Polyamide, Verfahren zu deren Herstellung und deren Verwendung zur Herstellung von Formkörpern.

In der deutschen Patentschrift Nr. 745029 ist ein Verfahren zur Herstellung von höhermolekularen Polyamiden beschrieben, nach welchem man primäre oder sekundäre aliphatische oder aromatische Aminocarbonsäurenitrile oder Gemische aus einem aliphatischen oder aromatischen Dinitril und etwa äquivalenten Mengen eines primären oder sekundären Diamins unter Druck in Gegenwart von Wasser auf Temperaturen von etwa 150 bis 300° C erhitzt. Als geeignetes Diamin wird unter anderem das 1,10-Diamino-1,10-dimethyldecan erwähnt. Gemäss der französischen Patentschrift Nr. 867384 können als Polykondensationskomponenten für die Herstellung von Polyamiden auch Formamide, z.B. das N,N-Diformyl-1,10-dimethyl-1,10-diaminodecan, eingesetzt werden. Ferner werden in der deutschen Offenlegungsschrift Nr. 1720513 generisch kochbeständige, transparente Polyamide aus aromatischen Dicarbonsäuren und gegebenenfalls alkylsubstituierten Alkylendiaminen mit 1 bis 10 C-Atomen in der Kette, die an mindestens einem der beiden endständigen C-Atome durch eine Alkylgruppe mit 1 bis 4 C-Atomen substituiert sind, beschrieben. Die konkrete Offenbarung dieser Offenlegungsschrift beschränkt sich aber auf transparente Polyamide aus aromatischen Dicarbonsäuren und Alkylendiaminen der vorerwähnten Art mit höchstens 7 C-Atomen in der Kette. In den britischen Patenschriften Nrn. 905475 und 919096 sind weitere transparente Polyamide aus Terephthalsäure, Isophthalsäure oder Gemischen davon und Hexamethylendiaminen mit mindestens drei durch Alkylsubstitution eingeführten C-Atomen in einer oder mehreren Seitenketten, wie 2,2,4- und 2,4,4-Trimethylhexamethylendiamin, 2-Methyl-4-äthylhexamethylendiamin und 2-Äthyl-4-methylhexamethylendiamin oder Isomerengemischen solcher Hexamethylendiamine beschrieben.

Die aus dieser Literatur vorbekannten Polyamide aus aromatischen Dicarbonsäuren und Derivaten davon und längerkettigen, gegebenenfalls alkylsubstituierten Diaminen wie auch das unter der Handelsbezeichnung „Trogamid T" bekannte Kondensationsprodukt aus Terephthalsäure und einem Isomerengemisch aus 2,2,4- und 2,4,4-Trimethylhexamethylendiamin lassen hinsichtlich der Wasseraufnahme, der Hydrolysebeständigkeit und/oder der Dimensionsstabilität unter Feuchtigkeitseinwirkung zu wünschen übrig, wodurch auch die mechanischen und elektrischen Eigenschaften dieser Polyamide beeinträchtigt werden. Ausserdem sind die Glasumwandlungstemperaturen dieser Produkte stark feuchtigkeitsabhängig.

Aufgabe der Erfindung war daher die Bereitstellung von neuen transparenten und kochbeständigen Polyamiden mit geringerer Wasseraufnahme, erhöhter Hydrolysebeständigkeit, guter Dimensionsstabilität unter Feuchtigkeitseinwirkung und entsprechend verbesserten mechanischen und elektrischen Eigenschaften.

Die neuen erfindungsgemässen Polyamide weisen eine reduzierte spezifische Viskosität (im folgenden auch reduzierte Lösungsviskosität genannt) von mindestens 0,5 und bevorzugt von 0,5 bis etwa 3,0 und insbesondere von etwa 0,7 bis etwa 2,0 dl/g, gemessen an einer 0,5%igen Lösung in m-Kresol bei 25° C, auf und bestehen aus wiederkehrenden Strukturelementen der Formel I

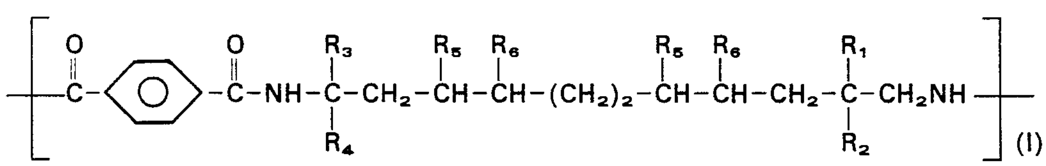

(I)

oder aus wiederkehrenden Strukturelementen der Formel II

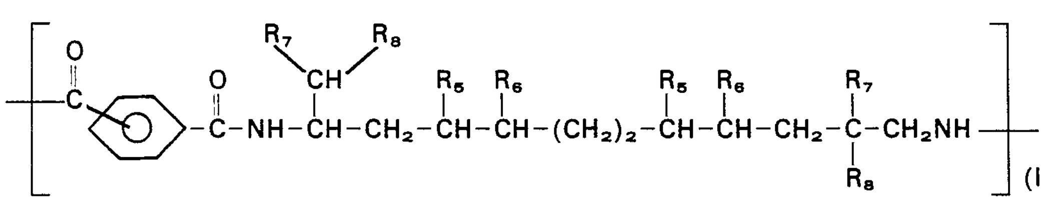

(II)

worin die Carbonylgruppen in den Strukturelementen der Formel II in 1,3-und/oder 1,4-Stellung an den Benzolkern gebunden sind,
$R_1$ Alkyl mit 1 bis 12 C-Atomen,
$R_2$ Wasserstoff oder Alkyl mit 1 bis 12 C-Atomen,
$R_3$ Alkyl mit 1 bis 12 C-Atomen, Cycloalkyl mit 4 bis 12 C-Atomen,
Aralkyl mit 7 oder 8 C-Atomen oder gegebenenfalls substituiertes Aryl,
$R_4$ Wasserstoff, Alkyl mit 1 bis 12 C-Atomen, Cycloalkyl mit 4 bis 12 C-Atomen, Aralkyl mit 7 oder 8 C-Atomen oder gegebenenfalls substituiertes Aryl oder $R_3$ und $R_4$ zusammen Alkylen mit 3 bis 11 C-Atomen,
$R_5$ und $R_6$ unabhängig voneinander Wasserstoff oder Methyl und $R_7$ und $R_8$ zusammen Alkylen mit 3 bis 11 C-Atomen bedeuten.

Durch $R_1$ bis $R_4$ dargestellte Alkylgruppen kön-

nen geradkettig oder verzweigt sein. Alkylgruppen $R_1$, $R_2$ und $R_4$ weisen bevorzugt 1 bis 5 C-Atome auf und sind geradkettig. Alkylgruppen $R_3$ weisen mit Vorteil 1 bis 7 C-Atome auf, besonders bevorzugt sind verzweigte Alkylgruppen $R_3$ mit 3 bis 7 C-Atomen. Beispiele von Alkylgruppen $R_1$ bis $R_4$ sind: die Methyl-, Äthyl-, n-Propyl-, Isopropyl-, n-, sek.- und tert.- Butyl-, n-Pentyl-, 2- oder 3-Pentyl-, n-Hexyl-, 2- oder 3-Heptyl-, n-Octyl-, n-Decyl- und n-Dodecylgruppe.

Durch $R_3$ oder $R_4$ dargestellte Cycloalkylgruppen weisen bevorzugt 5 bis 8 C-Atome auf; insbesondere handelt es sich dabei um die Cyclopentyl- oder Cyclohexylgruppe.

Als Aralkylgruppen $R_3$ oder $R_4$ kommen vor allem die Benzyl-, Methylbenzyl- oder Phenyläthylgruppe in Betracht. Sind Arylgruppen $R_3$ oder $R_4$ substituiert, so kommen als Substituenten vor allem Alkylgruppen mit 1 bis 4 C-Atomen und insbesondere 1 oder 2 C-Atomen in Betracht. Arylgruppen $R_3$ und $R_4$ können mehrere Alkylgruppen tragen, sind aber bevorzugt nur durch eine Alkylgruppe substituiert. Besonders bevorzugt sind die 1- oder 2-Naphthylgruppe, durch eine Alkylgruppe mit 1 bis 4 und besonders 1 oder 2 C-Atomen substituiertes Phenyl und ganz besonders unsubstituiertes Phenyl.

Durch $R_3$ und $R_4$ und/oder $R_7$ und $R_8$ dargestellte Alkylengruppen weisen bevorzugt 4 bis 7 C-Atome auf. Insbesondere handelt es sich dabei um die Tetramethylen- und ganz besonders die Pentamethylgengruppe.

Bevorzugt sind Polyamide mit Strukturelementen der Formel I oder II, worin $R_1$ Alkyl mit 1 bis 5 C-Atomen, $R_2$ Wasserstoff oder Alkyl mit 1 bis 5 C-Atomen, $R_3$ Alkyl mit 1 bis 7 C-Atomen, Cycloalkyl mit 5 bis 8 C-Atomen oder unsubstituiertes Phenyl, $R_4$ Wasserstoff oder Alkyl mit 1 bis 5 C-Atomen oder $R_3$ und $R_4$ zusammen Tetramethylen oder Pentamethylen, $R_5$ und $R_6$ je Wasserstoff und $R_7$ und $R_8$ zusammen Alkylen mit 4 bis 7 C-Atomen bedeuten.

Besonders bevorzugt sind Polyamide mit Strukturelementen der Formel I oder II, worin $R_1$ Alkyl mit 1 bis 5 C-Atomen, $R_2$ Wasserstoff oder Alkyl mit 1 bis 5 C-Atomen, $R_3$ verzweigtes Alkyl mit 3 bis 7 C-Atomen oder Cycloalkyl mit 5 bis 8 C-Atomen und $R_4$ Wasserstoff oder $R_3$ und $R_4$ zusammen Tetramethylen oder Pentamethylen, $R_5$ und $R_6$ je Wasserstoff und $R_7$ und $R_8$ zusammen Alkylen mit 4 bis 7 C-Atomen bedeuten.

Ganz besonders bevorzugt sind Polyamide, die aus wiederkehrenden Strukturelementen der Formel Ia

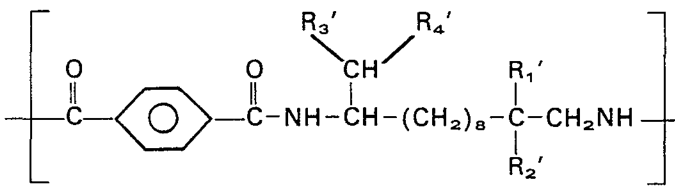

(Ia)

bestehen, worin $R_1'$ und $R_2'$ je Methyl oder Äthyl oder zusammen Alkylen mit 4 bis 7 C-Atomen, $R_3'$ Methyl oder Äthyl und $R_4'$ Alkyl mit 1 bis 4 C-Atomen oder $R_3'$ und $R_4'$ zusammen Alkylen mit 4 bis 7 C-Atomen bedeuten, und insbesondere Polyamide, die aus wiederkehrenden Strukturelementen der Formel Ia bestehen, worin $R_1'$, $R_2'$, $R_3'$ und $R_4'$ je Äthyl bedeuten oder worin $R_1'$ und $R_2'$ sowie $R_3'$ und $R_4'$ zusammen Pentamethylen darstellen.

Die erfindungsgemässen Polyamide können dadurch hergestellt werden, dass man Terephthalsäure oder ein amidbildendes Derivat davon mit einem Diamin der Formel III

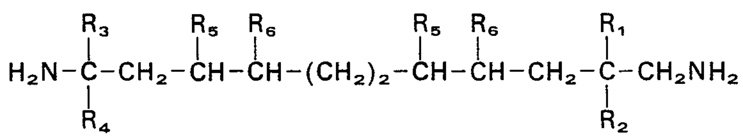

(III)

worin $R_1$ bis $R_6$ die unter Formel I angegebene Bedeutung haben, oder Terephthalsäure oder Isophthalsäure oder ein Gemisch von Tere- und Isophthalsäure bzw. amidbildende Derivate davon mit einem Diamin der Formel IV

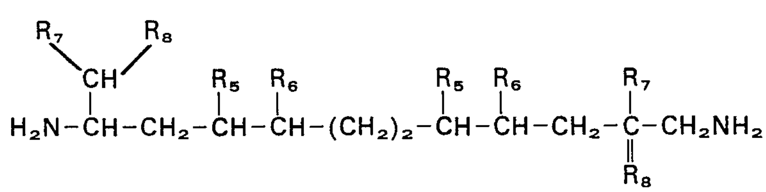

(IV)

worin $R_5$ bis $R_8$ die unter Formel I bzw. II angegebene Bedeutung haben, umsetzt.

Als amidbildende Derivate der Terephthalsäure oder Isophthalsäure können beispielsweise die entsprechenden Dihalogenide, vor allem die Dichloride, Dinitrile, Dialkyl- oder Diarylester, besonders Dialkylester mit je 1 bis 4 C-Atomen in den Alkylteilen und Diphenylester, verwendet werden.

Bevorzugt ist die Herstellung nach dem Schmelzpolykondensationsverfahren in mehreren Stufen. Dabei werden die Reaktionskomponenten in im wesentlichen stöchiometrischen Mengen,

bevorzugt Salze aus Terephthalsäure und Diamin der Formel III oder Salze aus Iso- oder Terephthalsäure oder Gemischen davon und Diamin der Formel IV, unter Druck bei Temperaturen zwischen etwa 220 und 300° C in der Schmelze unter Inertgas, wie Stickstoff, vorkondensiert. Die für die Vorkondensation einzusetzenden Salze werden zweckmässig einzeln aus im wesentlichen stöchiometrischen Mengen Terephthalsäure und Diamin der Formel III bzw. Iso- oder Terephthalsäure und Diamin der Formel IV in geeigneten inerten organischen Lösungsmitteln hergestellt. Als inerte organische Lösungsmittel eignen sich dabei z.B. cycloaliphatische Alkohole, wie Cyclopentanol und Cyclohexanol, und vor allem aliphatische Alkohole mit bis zu 6 C-Atomen, wie Methanol, Äthanol, n-Propanol, Butanole, Pentanole und Hexanole, sowie Gemische derartiger Lösungsmittel mit Wasser. Das Vorkondensat kann anschliessend bei Temperaturen zwischen etwa 220 und 300° C bei Normaldruck und zweckmässig ebenfalls in Inertgasatmosphäre bis zur Bildung der erfindungsgemässen Polyamide weiterkondensiert werden. Unter Umständen kann es von Vorteil sein, nach Beendigung der Polykondensation Vakuum anzulegen, um das Polyamid zu entgasen.

Die erfindungsgemässen Polyamide können auch durch Schmelzpolykondensation von Diaminen der Formel III oder IV mit im wesentlichen stöchiometrischen Mengen aktivierter Ester der Terephthalsäure bzw. der Isophthalsäure hergestellt werden. Als aktivierte Ester eignen sich vor allem die entsprechenden Diphenylester. Die Reaktionstemperaturen liegen dabei im allgemeinen zwischen etwa 230 und 300° C. Dieses Verfahren ist insbesondere bevorzugt, wenn $R_4$ $C_{1-12}$-Alkyl oder $R_3$ und $R_4$ zusammen $C_{3-11}$-Alkylen darstellen.

Schliesslich können die erfindungsgemässen Polyamide auch in an sich bekannter Weise durch Lösungsmittel- oder Grenzflächenpolykondensation hergestellt werden.

Die Diamine der Formel III und IV sind neu. Sie können zum Beispiel dadurch hergestellt werden, dass man eine Verbindung der Formel V

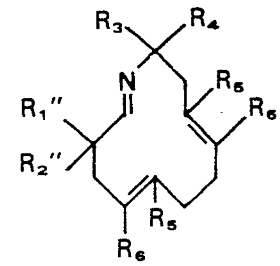

(V)

mit einer Verbindung der Formel VI

$$[H_2NOH \cdot H^{\oplus}]_n X^{\ominus n} \quad (VI)$$

zu einer Verbindung der Formel VIIa

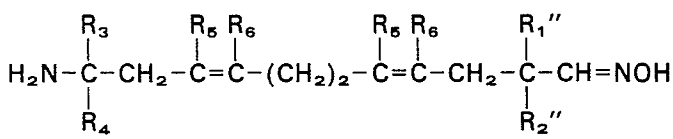

(VIIa)

umsetzt oder eine Verbindung der Formel V katalytisch zu einer Verbindung der Formel VIII

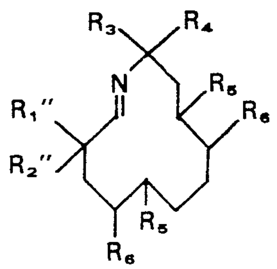

(VIII)

hydriert und die Verbindung der Formel VIII mit einer Verbindung der Formel VI zu einer Verbindung der Formel VIIb

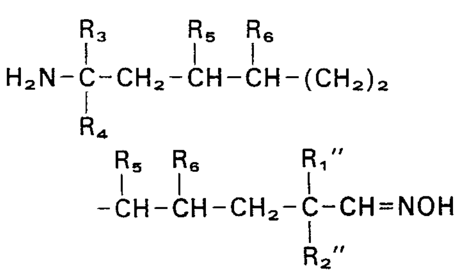

(VIIb)

umsetzt. Anschliessend werden die Verbindungen der Formeln VIIa und VIIb katalytisch zu Verbindungen der Formel III hydriert. In den obigen Formeln V bis VIII haben $R_3$ bis $R_6$ die unter Formel I bzw. II angegebene Bedeutung, $R_1''$ und $R_2''$ haben dieselbe Bedeutung wie $R_1$ und $R_2$ oder stellen zusammen Alkylen mit 3 bis 11 C-Atomen dar, X stellt das Anion einer anorganischen, unter den Reaktionsbedingungen nicht oxidierenden Säure, z.B. das Anion der Chlor- oder Bromwasserstoffsäure oder der Schwefelsäure, dar und n ist eine der Wertigkeit von X entsprechende ganze Zahl. Anstelle der Hydroxylaminsalze der Formel VI können auch Hydrazine, die Phenylhydrazin oder Hydrazinhydrat, Benzylamin oder Semicarbazid bzw. deren Salze mit anorganischen Säuren eingesetzt werden. Dabei entstehen als Zwischenprodukte der Formel VIIa oder VIIb die entsprechenden Hydrazone, Benzylamine oder Semicarbazone.

Die Umsetzung der Verbindungen der Formel V und VIII mit der Verbindung der Formel VI wird zweckmässig in wässrigem Medium und unter Zusatz einer anorganischen, unter den Reaktionsbedingungen nicht oxidierenden Säure, wie verdünnte HCl oder Schwefelsäure, vorgenommen. Die Hydrierungen werden mit Vorteil in Gegenwart geeigneter inerter organischer Lösungsmittel, wie cycloaliphatische Kohlenwasserstoffe, cyclische Äther oder Alkohole, besonders Cyclohexan, Tetrahydrofuran und Methanol, und unter Verwendung an sich bekannter Hydrierungskatalysatoren durchgeführt. Als solche eignen sich je nach Art der zu hydrierenden Verbindung Platin-, Rhodium-, Palladium-, Ruthenium-, Rhodium/Aluminiumoxid- oder Nickelkatalysatoren.

Verbindungen der Formel III, worin $R_3$ und/oder $R_4$ Cyclohexyl bedeuten, können auch durch katalytische Hydrierung der entsprechenden Diamine der Formel III mit $R_3$ und/oder $R_4$=Phenyl hergestellt werden.

Die Ausgangsprodukte der Formel VI sind bekannt. Die Verbindungen der Formel V können auf analoge Weise wie in „Helv. Chim. Acta", *61*, Fasc. 3, 1122-1124 (1978) beschrieben durch nickelkatalysierte Mischoligomerisation von 2-Aza-1,3-butadienen der Formel IX

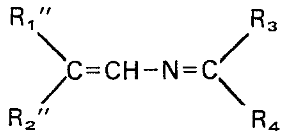

(IX)

mit Verbindungen der Formel X

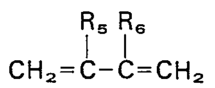

(X)

hergestellt werden, wobei $R_1''$ bis $R_6$ die oben angegebene Bedeutung haben. Geeignete Katalysatorsysteme sind z.B. in der deutschen Offenlegungsschrift Nr. 2330087 beschrieben. Die 2-Aza-1,3-butadiene der Formel IX sind bekannt oder können analog den in der Literatur beschriebenen Methoden hergestellt werden [vgl. z.B. „Zhurnal Organicheskoi Khimii", *6*, Nr. 11, 2197-2199 (1970); „Izw. Akad. Nauk. SSSR, Ser. Khim.", Nr. 9, 2038-2045 (1975); „Tetrahedron", *34*, 833-839 (1978); „J. Org. Chem.", *43*, 782-784 (1978); US Patentschrift Nrn. 2319848 und 3706802].

Die erfindungsgemässen Poylamide haben ein glasklares Aussehen, sind beständig gegen kochendes Wasser und zeichnen sich vor allem durch geringe Wasseraufnahme, hohe Hydrolysebeständigkeit und/oder gute Dimensionsstabilität unter Feuchtigkeitseinwirkung, verbunden mit verbesserten mechanischen und insbesondere elektrischen Eigenschaften, wie nahezu feuchtigkeitsunabhängige hohe Glasumwandlungstemperaturen aus.

Die erfindungsgemässen Polyamide können nach an sich bekannten Methoden zu transparenten Formkörpern verschiedenster Art verarbeitet werden, beispielsweise nach dem Spritzguss- oder Extrusionsverfahren. Sie eignen sich besonders zur Herstellung von transparenten Geräten und Geräteteilen aus der Schmelze.

*Beispiel 1*

In einem Kolben, der mit Rührer, Tropftrichter und Rückflusskühler versehen ist, werden 54,5 g Terephthalsäure in einem Gemisch von 750 ml Äthanol und 750 ml Wasser aufgeschlämmt und zum Rückfluss erhitzt. Nun werden aus dem Tropftrichter 103,2 g 1-(3-Pentyl)-10,10-diäthyl-1,11-diaminoundecan dazugegeben. Nach 20 min wird langsam auf Raumtemperatur (20 bis 25° C) abgekühlt, und das ausgefallene Salz wird abfiltriert. Nach dem Trocknen im Vakuum erhält man 147 g Salz (93% d.Th.). 10 g dieses Salzes werden unter Stickstoff in ein Bombenrohr eingeschmolzen und 1 h in einem Salzbad auf 270° C erhitzt. Das Salz schmilzt dabei zu einer farblosen Schmelze. Nach dem Abkühlen auf Raumtemperatur wird die erstarrte Schmelze aus dem Bombenrohr entnommen und in einer offenen Polykondensationsapparatur unter Ausschluss von Luft und ständigem Durchleiten von Stickstoff 6 h bei 270° C gehalten. Beim Abkühlen erstarrt die viskose Schmelze zu einer glasklaren, farblosen Masse. Die reduzierte Lösungsviskosität des erhaltenen Polyamids, gemessen als 0,5%ige Lösung in m-Kresol bei 25° C, beträgt 0,91 dl/g; Glasumwandlungstemperatur, bestimmt im Differentialkalorimeter (DSC)=123° C.

Eine bei 270° C mittels einer hydraulischen Presse hergestellte Folie wird bei Raumtemperatur einer relativen Luftfeuchtigkeit von 65% ausgesetzt, bis keine Gewichtszunahme mehr festzustellen ist. Der Sättigungswert beträgt 0,7 Gew.%. Setzt man die Folie der Einwirkung von kochendem Wasser aus, so ist nach 6 h noch keinerlei Beeinträchtigung der Transparenz festzustellen.

*Beispiele 2 und 3*

Auf die in Beispiel 1 beschriebene Weise werden weitere Polyamide aus Terephthalsäure und 1-Cyclohexyl-10,10-dimethyl-1,11-diaminoundecan bzw. 1-Isopropyl-10,10-dimethyl-1,11-diaminoundecan hergestellt. Die Eigenschaften der erhaltenen Polyamide sind in der Tabelle 1 angegeben.

*Beispiel 4*

In einem zylindrischen Rührgefäss wird eine Mischung von 12,40 g 1-Cyclohexyl-10-pentamethylen-1,11-diaminoundecan und 5,95 g Isophthalsäure unter Ausschluss von Luft und unter ständigem Rühren 30 min in einem Salzbad von 220° C belassen. Nach je 30 min wird die Temperatur jeweils um 10° C erhöht, bis 270° C erreicht werden. Zu diesem Zeitpunkt hat sich die Isophthalsäure vollständig aufgelöst. Die homogene Schmelze wird nun 6 h bei dieser Temperatur gerührt. Beim Abkühlen erstarrt das Polyamid zu einer glasklaren Masse. Die Eigenschaften des so hergestellten Polyamids sind in der Tabelle 1 angegeben.

*Beispiel 5*

33,66 g 1-Cyclohexyl-10-pentamethylen-1,11-diaminoundecan werden in einer Mischung von 360 ml Äthanol und 180 ml Wasser gelöst und auf 50° C erwärmt. Nun gibt man 16,61 g Terephthalsäure zu und erhitzt die Mischung unter Rühren auf Rückflusstemperatur. Dabei löst sich die Terephthalsäure unter Salzbildung mit dem Diamin vollständig auf. Beim Abkühlen der Lösung scheidet sich das Salz aus der Lösung ab. Das

Salz wird abfiltriert und bei 80° C im Vakuum getrocknet. Man erhält 46,5 g Salz (92% d.Th.). 10 g dieses Salzes werden unter Inertgas in ein Bombenrohr eingeschmolzen und 3 h in einem Salzbad auf 280° C erhitzt. Dabei entsteht eine klare Schmelze, die beim Abkühlen zu einer transparenten Masse erstarrt. Dieses so erhaltene Vorkondensat wird in einem offenen Kondensationsrohr unter andauerndem Durchleiten von Stickstoff 6 h lang bei 270° C polykondensiert. Die Eigenschaften des so erhaltenen transparenten Polyamids sind in Tabelle 1 zusammengefasst.

*Beispiel 6*

6,12 g des gemäss Beispiel 5 hergestellten Salzes aus Terephthalsäure und 1-Cyclohexyl-10-pentamethylen-1,10-diaminoundecan werden mit 2,732 g 1-Cyclohexyl-10-pentamethylen-1,11-diaminoundecan und 1,348 g Isophthalsäure vermischt und unter den in Beispiel 5 angegebenen Bedingungen zu einem Copolyamid mit einem Anteil von 40 Gew.% Isophthalsäure, bezogen auf das Gesamtgewicht der Säuren, polykondensiert. Die Eigenschaften des erhaltenen Copolyamids sind in Tabelle 1 angegeben.

*Beispiel 7*

5,047 g 1-Cyclopentyl-10-tetramethylen-1,10-diaminoundecan werden zusammen mit 5,183 g Terephthalsäurediphenylester in einem Kondensationsgefäss vorgelegt. Nachdem man durch mehrmaliges Evakuieren und Wiederfüllen des Gefässes mit Stickstoff die Luft verdrängt hat, wird das Gefäss in ein auf 220° C erhitztes Salzbad eingetaucht. Stündlich wird die Temperatur um 10° C erhöht, bis 270° C erreicht sind. Nun wird bei dieser Temperatur Wasserstrahlvakuum angelegt, und das Polyamid wird 2 h lang entgast, wobei das abgespaltene Phenol praktisch vollständig aus dem Polyamid entfernt wird. Beim Abkühlen erstarrt die Schmelze zu einer transparenten Masse. Die Eigenschaften des erhaltenen Polyamids sind in Tabelle 1 angegeben.

*Beispiel 8*

Beispiel 7 wird wiederholt, wobei man jedoch die Hälfte des Terephthalsäurediphenylesters durch Isophthalsäurediphenylester ersetzt. Die Eigenschaften des erhaltenen Copolyamids sind in Tabelle 1 angegeben.

*Beispiel 9*

Analog der in Beispiel 7 beschriebenen Arbeitsweise wird durch Polykondensation von 5,24 g 1-Phenyl-10,10-dimethyl-1,11-diaminoundecan mit 5,70 g Terephthalsäurediphenylester ein Polyamid hergestellt, dessen Eigenschaften in Tabelle 1 angegeben sind.

*Beispiel 10*

16,5 g Terephthalsäure werden in einer Mischung von 200 ml Wasser und 200 ml Äthanol zum Sieden erhitzt und innerhalb von 5 min mit 27,09 g 1-(3-Pentyl)-10-methyl-1,11-diaminoundecan versetzt. Es entsteht eine klare Lösung, aus welcher beim Abkühlen auf 5° C das gebildete Salz auskristallisiert. Das Salz wird abfiltriert und getrocknet. Die Ausbeute beträgt 28,9 g (66% d. Th.). Weitere 11,9 g Salz können durch Einengen der Mutterlauge gewonnen werden.

10 g des obigen Salzes werden nach den in Beispiel 1 angegebenen Bedingungen zu einem farblosen transparenten Polyamid polykondensiert und zu einer Folie verpresst. Die physikalischen Eigenschaften des Polyamids sind in Tabelle 1 angegeben.

*Beispiel 11*

1,742 g 1-Pentamethylen-10,10-dimethyl-1,11-diaminoundecan und 1,951 g Terephthalsäurediphenylester werden gemäss Beispiel 7 zu einem Polyamid polykondensiert.

Die Eigenschaften des erhaltenen Polyamids sind in Tabelle 1 zusammengefasst.

*(Tabelle auf der nächsten Seite)*

Die in den vorangehenden Beispielen verwendeten 1,11-Diaminoundecane können wie folgt hergestellt werden:

*Herstellungsmethode A*

*1-Isopropyl-10,10-dimethyl-1,11-diaminoundecan*

Unter Schutzgas (Argon) werden 2,57 g (0,01 mol) Nickelacetylacetonat und 1,66 g (0,01 mol) Triäthylphosphit in 120 g absolutem Toluol gelöst, worauf man die Lösung bei 20 bis 25° C mit 1,3-Butadien sättigt. Anschliessend werden unter schwachem Einleiten von 1,3-Butadien langsam 3,9 g (0,03 mol) Äthoxydiäthylaluminium zugetropft. Es wird auf 60° C aufgeheizt, und unter starkem Einleiten von 1,3-Butadien werden innerhalb von 45 min 122,5 g (0,98 mol) N-Isobutyliden-2-methylpropenylamin [hergestellt durch Umsetzung von Isobutyraldehyd mit Ammoniak gemäss „J. Org. Chem.", *26*, 1822-1825 (1961)] so zugetropft, dass das eingeleitete Butadien gerade verbraucht wird. Nach beendetem Zutropfen wird noch 1 h unter stetigem Einleiten von 1,3-Butadien bei 60° C nachgerührt und dann auf 20 bis 25° C gekühlt. Der Katalysator wird durch Zugabe von 0,32 g (0,01 mol) Schwefel inaktiviert, und die Reaktionslösung wird destilliert. Durch anschliessende Feindestillation erhält man 212,5 g (0,912 mol) 3,3-Dimethyl-12-isopropyl-1-aza-1,5,9-cyclododecatrien; Sdp. 54 bis 55° C/ 1,33 Pa; $n_D^{20}$ = 1,4832.

233,4 g (1 mol) 3,3-Dimethyl-12-isopropyl-1-aza-1,5,9-cyclododecatrien werden innerhalb von 1 h so zu 100 g 37%iger Salzsäure und 200 ml Wasser getropft, dass die Temperatur nicht über 80° C ansteigt. Dann wird auf 20 bis 25° C abgekühlt und mit 69,5 g (1,0 mol) Hydroxylaminohydrochlorid versetzt. Während 1 h werden unter Kühlung mit einem Wasserbad ca. 92 g (2,3 mol) festes Natriumhydroxid zugegeben, bis der pH-Wert der wässrigen Lösung 10 bis 11 beträgt. Die sich abscheidende organische Phase wird abge-

*Tabelle 1*

| Beispiel Nr. | Dicarbonsäure | Diamin | Red. Lösungsvisk. 1) | Glasumwandl. 2) temp. °C | Wasseraufnahme Gew.% 3) | Beständigkeit g. Kochwasser/h |
|---|---|---|---|---|---|---|
| 2 | TPS | 1-Cyclohexyl-10,10-dimethyl-1,11-diaminoundecan | 0,87 | 137 | 0,9 | >6 |
| 3 | TPS | 1-Isopropyl-10,10-dimethyl-1,11-diaminoundecan | 1,09 | 131 | 1,0 | >6 |
| 4 | IPS | 1-Cyclohexyl-10-pentamethylen-1,11-diaminoundecan | 0,68 | 132 | 1,0 | >6 |
| 5 | TPS | do. | 0,87 | 143 | 0,8 | >6 |
| 6 | TPS 60% IPS 40% | do. | 0,85 | 139 | 0,9 | >6 |
| 7 | TPS | 1-Cyclopentyl-10-tetramethylen-1,11-diaminoundecan | 1,43 | 139 | 1,0 | >6 |
| 8 | TPS 50% IPS 50% | do. | 1,02 | 133 | 1,1 | >6 |
| 9 | TPS | 1-Phenyl-10,10-dimethyl-1,11-diaminoundecan | 1,59 | 133 | 1,1 | >6 |
| 10 | TPS | 1-(3-Pentyl)-10-methyl-1,11-diaminoundecan | 0,99 | 128 | 0,8 | >6 |
| 11 | TPS | 1-Pentamethylen-10,10-dimethyl-1,11-diaminoundecan | 0,68 | 138 | 0,9 | >6 |

TPS = Terephthalsäure bzw. Ester davon IPS = Isophthalsäure bzw. Ester davon
1) Reduzierte Lösungsviskosität als 0,5%ige Lösung in m-Kresol: dl/g
2) Glasumwandlungstemperatur, bestimmt im Differentialkalorimeter (DSC)
3) Wasseraufnahme bei 65% relativer Luftfeuchtigkeit (Sättigungswert)

trennt und mit Wasser salzfrei gewaschen. Nach der Destillation erhält man 245 g (0,92 mol) 2,2-Dimethyl-11-isopropyl-11-aminoundeca-4,8-dienaloxim; Sdp. 158 bis 162° C/4 Pa; $n_D^{20}$= 1,4930.

490 g (1,84 mol) 2,2-Dimethyl-11-isopropyl-11-aminoundeca-4,8-dienaloxim werden in 2,4 l Methanol gelöst und zusammen mit ca. 200 g flüssigem Ammoniak unter Zugabe von 150 g Raney-Nickel in einen 6,3-l-Stahlautoklaven eingefüllt. Es wird anschliessend Wasserstoff bis zu einem Druck von 100 bar aufgepresst und unter Rühren auf 100° C aufgeheizt. Man hydriert ca. 5 h unter diesen Bedingungen, kühlt ab und lässt dann den Ammoniak und überschüssigen Wasserstoff abblasen. Bei der anschliessenden Destillation im Hochvakuum erhält man 436 g (1,705 mol) 1-Isopropyl-10,10-dimethyl-1,11-diaminoundecan als farblose, wasserklare Flüssigkeit; Sdp. 87° C/4 Pa; $n_D^{20}$ = 1,4619.

*1-Phenyl-10,10-dimethyl-1,11-diaminoundecan*

Umsetzung von N-Benzyliden-(2-methylpropenylamin) [hergestellt durch Umsetzung von Benzaldehyd mit Methallylamin und anschliessende Isomerisierung in Gegenwart von Kalium-tert.-butylat; Sdp. 65 bis 66° C/7 Pa; $n_D^{20}$ = 1,5836] mit 1,3-Eutadien zum 3,3-Dimethyl-12-phenyl-1-aza-1,5,9-cyclododecatrien; Sdp. 128 bis 130° C/4 Pa; Smp. 66 bis 68° C.

Umsetzung des 3,3-Dimethyl-12-phenyl-1-aza-1,5,9-cyclododecatriens mit Hydroxylaminsulfat in Gegenwart von Salzsäure und Wasser zum 2,2-Dimethyl-11-phenyl-11-aminoundecan-4,8-dienaloxim und Hydrierung des letzteren zum 1-Phenyl-10,10-dimethyl-1,11-diaminoundecan; Sdp. 150° C/3 Pa; $n_D^{20}$ = 1,5054.

*1-Cyclohexyl-10,10-dimethyl-1,11-diaminoundecan*

Hydrierung von 1-Phenyl-10,10-dimethyl-1,11-diaminoundecan in Gegenwart eines Ruthenium/Kohle-Katalysators; Sdp. 147° C/4 Pa; $n_D^{20}$ = 1,4805.

*1-Pentamethylen-10,10-dimethyl-1,11-diaminoundecan*

Umsetzung von N-Cyclohexyliden-(2-methylpropenylamin) [hergestellt durch Umsetzung von Cyclohexanon mit Methylamin und anschliessende Isomerisierung in Gegenwart von Kalium-tert.-butylat, Sdp. 96° C/1700 Pa; $n_D^{20}$ = 1,5160] mit 1,3-Butadien zum 3,3-Dimethyl-12-pentamethylen-1-aza-1,5,9-cyclododecatrien; Sdp. 96° C/4 Pa; $n_D^{20}$ = 1,5116.

Umsetzung des 3,3-Dimethyl-12-pentamethylen-1-aza-1,5,9-cyclododecatriens mit Hydroxylaminhydrochlorid in Gegenwart von Salzsäure und Wasser zum 2,2-Dimethyl-11-pentamethylen-11-aminoundeca-4,8-dienaloxim und Hydrierung des letzteren zum 1-Pentamethylen-10,10-dimethyl-1,11-diaminoundecan; Sdp. 112° C/4 Pa; $n_D^{20}$ = 1,4833.

*1-(3-Pentyl)-10-methyl-1,11-diaminoundecan*

Umsetzung von N-(2-Äthyl)-buten-2-ylidenpropenylamin [hergestellt durch Umsetzung von 2-Äthylbutanal mit Allylamin und anschliessende Isomerisierung analog „Zhurnal Organicheskoi Khimii", *6*, Nr. 11, 2197-2199 (1970); Sdp. 70° C/1700 Pa; $n_D^{20}$ = 1,5227] mit 1,3-Butadien zum 3-Methyl-12-(3-penten-2-yl)-1-aza-1,5,9-cyclododecatrien; Spd. 100° C/4 Pa; $n_D^{20}$ = 1,5056.

Umsetzung des 3-Methyl-12-(3-penten-2-yl)-1-aza-1,5,9-cyclododecatriens mit Hydroxylaminsulfat in Gegenwart von Salzsäure und Wasser zum 2-Methyl-11-(3-penten-2-yl)-11-aminoundeca-4,8-dienaloxim und Hydrierung des letzteren zum 1-(3-Pentyl)-10-methyl-1,11-diaminoundecan; Sdp. 115° C/5 Pa; $n_D^{20}$ = 1,4662.

*Herstellungsmethode B*

*1-Isopropyl-10,10-dimethyl-1,11-diaminoundecan*

466,8 g (2 mol) 3,3-Dimethyl-12-isopropyl-1-aza-1,5,9-cyclododecatrien werden in 4 l Cyclohexan gelöst und bei 20 bis 25° C und einem Anfangsdruck von 100 bar in Gegenwart von 80 g Rhodium/Aluminiumoxid während 4 h in einem Stahlautoklaven hydriert. Nach dem Abdestillieren des Lösungsmittels erhält man als Hauptfraktion 425 g (1,79 mol) 3,3-Dimethyl-12-isopropyl-1-azacyclododecan; Sdp. 92 bis 94° C/4 Pa; $n_D^{20}$ = 1,4706.

Umsetzung des 3,3-Dimethyl-12-isopropyl-1-azacyclododecens mit Hydroxylaminhydrochlorid in Gegenwart von Salzsäure und Wasser zum 2,2-Dimethyl-11-isopropyl-11-aminoundecanaloxim; Sdp. 145° C/4 Pa; $n_D^{20}$ = 1,4761.

Hydrierung des 2,2-Dimethyl-11-isopropyl-11-aminoundecanaloxims analog der unter A beschriebenen Methode zu 1-Isopropyl-10,10-dimethyl-1,11-diaminoundecan.

*1-(3-Pentyl)-10,10-diäthyl-1,11-diaminoundecan*

Umsetzung von 1-(3-Pentyl)-4,4-diäthyl-2-aza-1,3-butadien [hergestellt durch Umsetzung von 2-Äthylbutyraldehyd mit Ammoniak gemäss US Patentschrift Nr. 2319848] mit 1,3-Butadien zum 3,3-Diäthyl-12-(3-pentyl)-1-aza-1,5,9-cyclododecatrien (Sdp. 90 bis 92° C/0,13 Pa; $n_D^{20}$ = 1,4840) und Hydrierung zum 3,3-Diäthyl-12-(3-pentyl)-1-azacyclododecen; Sdp. 95° C/4 Pa.

Umsetzung des 3,3-Diäthyl-12-(3-pentyl)-1-azacyclododecens mit Hydroxylaminsulfat in Gegenwart von Salzsäure und Wasser zum 2,2-Diäthyl-11-(3-pentyl)-11-aminoundecanaloxim ($n_D^{20}$ = 1,4637) und Hydrierung des letzteren zum 1-(3-Pentyl)-10,10-diäthyl-1,11-diaminoundecan; Sdp. 133 bis 135° C/3 Pa; $n_D^{20}$ = 1,4704.

*1-Cyclohexyl-10-pentamethylen-1,11-diaminoundecan*

Umsetzung von N-Cyclohexylmethyliden(cyclohexylidenmethylamin) [hergestellt durch Umsetzung von Cyclohexanaldehyd mit Ammoniak; Sdp. 83° C/4 Pa; $n_D^{20}$ = 1,5260] mit 1,3-Butadien zum 3-Pentamethylen-12-cyclohexyl-1-aza-1,5,9-cyclododecatrien (Sdp. 140° C/3 Pa; $n_D^{20}$ = 1,5191) und Hydrierung des 3-Pentamethylen-12-cyclohexyl-1-aza-1,5,9-cyclododecatriens zum 3-Pentamethylen-12-cyclohexyl-1-azacyclododecen; Sdp. 140 bis 142° C/3 Pa; $n_D^{20}$ = 1,4982.

Umsetzung des 3-Pentamethylen-12-cyclohexyl-1-azacyclododecens mit Hydroxylaminhydrochlorid zum 2-Pentamethylen-11-cyclohexyl-11-aminoundecanaloxim und Hydrierung des letzteren zum 1-Cyclohexyl-10-pentamethylen-1,11-diaminoundecan; Sdp. 166 bis 170° C/3 Pa; $n_D^{20}$ = 1,4975.

*1-Cyclopentyl-10-tetramethylen-1,11-diaminoundecan*

Umsetzung von N-Cyclopentylmethyliden-(cyclopentylidenmethylamin) [Herstellung analog US Patentschrift Nr. 2319848; Sdp. 125° C/$1,86 \times 10^3$ Pa; $n_D^{20}$ = 1,5245] mit 1,3-Butadien zum 3-Tetramethylen-12-cyclopentyl-1-aza-1,5,9-cyclododecatrien (Sdp. 120° C/1 Pa) und Hydrierung des 3-Tetramethylen-12-cyclopentyl-1-aza-1,5,9-cyclododecatriens zum 3-Tetramethylen-12-cyclopentyl-1-azacyclododecen; Sdp. 130° C/7 Pa.

Umsetzung des 3-Tetramethylen-12-cyclopentyl-1-azacyclododecens mit Hydroxylaminsulfat zum 2-Tetramethylen-11-cyclopentyl-11-aminoundecanaloxim und Hydrierung des letzteren zum 1-Cyclopentyl-10-tetramethylen-1,10-diaminoundecan; Sdp. 166 bis 168° C/5 Pa; $n_D^{20}$ = 1,4922.

## Patentansprüche

1. Ein transparentes Polyamid mit einer reduzierten spezifischen Viskosität von mindestens 0,5 dl/g, gemessen an einer 0,5%igen Lösung in m-Kresol bei 25° C, das aus wiederkehrenden Strukturelementen der Formel I

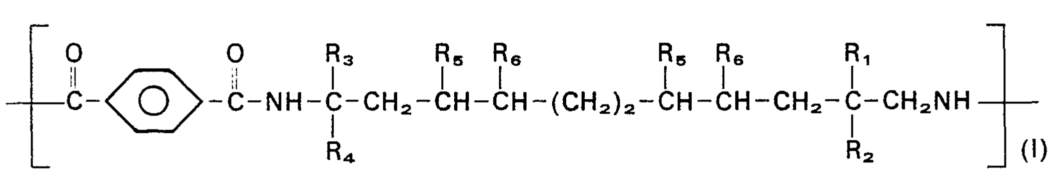

(I)

oder aus wiederkehrenden Strukturelementen der Formel II

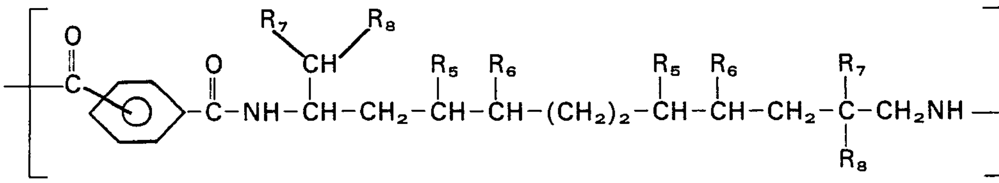

(II)

besteht, worin die Carbonylgruppen in den Strukturelementen der Formel II in 1,3- und/oder 1,4-Stellung an den Benzolkern gebunden sind,
$R_1$ Alkyl mit 1 bis 12 C-Atomen,
$R_2$ Wasserstoff oder Alkyl mit 1 bis 12 C-Atomen,
$R_3$ Alkyl mit 1 bis 12 C-Atomen, Cycloalkyl mit 4 bis 12 C-Atomen,
Aralkyl mit 7 oder 8 C-Atomen oder gegebenenfalls substituiertes Aryl,
$R_4$ Wasserstoff, Alkyl mit 1 bis 12 C-Atomen, Cycloalkyl mit 4 bis 12 C-Atomen, Aralkyl mit 7 oder 8 C-Atomen oder gegebenenfalls substituiertes Aryl oder $R_3$ und $R_4$ zusammen Alkylen mit 3 bis 11 C-Atomen,
$R_5$ und $R_6$ unabhängig voneinander Wasserstoff oder Methyl und $R_7$ und $R_8$ zusammen Alkylen mit 3 bis 11 C-Atomen bedeuten.

2. Ein Polyamid nach Anspruch 1, worin $R_1$ Alkyl mit 1 bis 5 C-Atomen, $R_2$ Wasserstoff oder Alkyl mit 1 bis 5 C-Atomen, $R_3$ Alkyl mit 1 bis 7 C-Atomen, Cycloalkyl mit 5 bis 8 C-Atomen oder unsubstituiertes Phenyl, $R_4$ Wasserstoff oder Alkyl mit 1 bis 5 C-Atomen oder $R_3$ und $R_4$ zusammen Tetramethylen oder Pentamethylen, $R_5$ und $R_6$ je Wasserstoff und $R_7$ und $R_8$ zusammen Alkylen mit 4 bis 7 C-Atomen bedeuten.

3. Ein Polyamid nach Anspruch 1 oder 2, worin $R_1$ Alkyl mit 1 bis 5 C-Atomen, $R_2$ Wasserstoff oder Alkyl mit 1 bis 5 C-Atomen, $R_3$ verzweigtes Alkyl mit 3 bis 7 C-Atomen oder Cycloalkyl mit 5 bis 8 C-Atomen und $R_4$ Wasserstoff oder $R_3$ und $R_4$ zusammen Tetramethylen oder Pentamethylen, $R_5$ und $R_6$ je Wasserstoff und $R_7$ und $R_8$ zusammen Alkylen mit 4 bis 7 C-Atomen bedeuten.

4. Ein Polyamid nach Anspruch 1, das aus wiederkehrenden Strukturelementen der Formel Ia

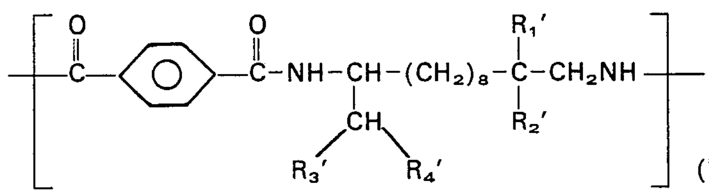

(Ia)

besteht, worin $R_1'$ und $R_2'$ je Methyl oder Äthyl oder zusammen Alkylen mit 4 bis 7 C-Atomen, $R_3'$ Methyl oder Äthyl und $R_4'$ Alkyl mit 1 bis 4 C-Atomen oder $R_3'$ und $R_4'$ zusammen Alkylen mit 4 bis 7 C-Atomen darstellen.

5. Ein Polyamid nach Anspruch 4, worin $R_1'$, $R_2'$, $R_3'$ und $R_4'$ je Äthyl bedeuten oder worin $R_1'$ und $R_2'$ sowie $R_3'$ und $R_4'$ zusammen je Pentamethylen bedeuten.

6. Ein Verfahren zur Herstellung eines Polyamids nach Anspruch 1, dadurch gekennzeichnet, dass man Terephthalsäure oder ein amidbildendes Derivat davon mit einem Diamin der Formel III

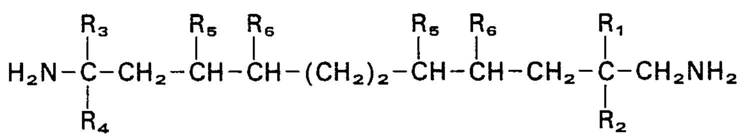

(III)

worin $R_1$ bis $R_6$ die unter Formel I angegebene Bedeutung haben,
oder Terephthalsäure oder Isophthalsäure oder ein Gemisch von Terephthalsäure und Isophthalsäure bzw. amidbildende Derivate davon mit einem Diamin der Formel IV

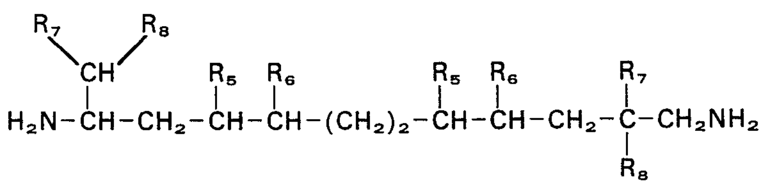

(IV)

worin $R_5$ bis $R_8$ die unter Formel I bzw. II angegebene Bedeutung haben, umsetzt.

7. Ein Verfahren nach Anspruch 6, dadurch gekennzeichnet, dass man ein Polyamid der in einem der Ansprüche 1 bis 5 genannten Art herstellt.

8. Verwendung eines Polyamids nach Anspruch 1 zur Herstellung von Formkörpern.

**Claims**

1. A transparent polyamide having a reduced specific viscosity of at least 0.5 dl/g, measured on a 0.5% solution in m-cresol at 25°C, which polyamide consists of recurring structural elements of the formula I

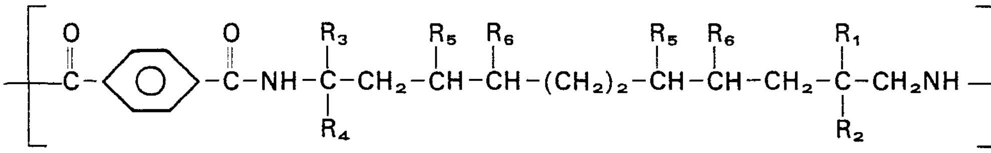

(I)

or of recurring structural elements of the formula II

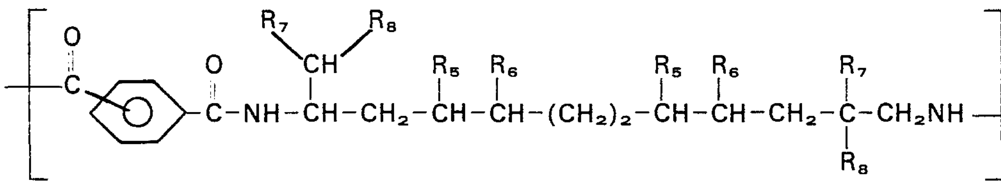

(II)

wherein the carbonyl groups in the structural elements of the formula II are bound in the 1,3- and/or 1,4-position to the benzene nucleus,
$R_1$ is alkyl having 1-12 C atoms,
$R_2$ is hydrogen or alkyl having 1-12 C atoms,
$R_3$ is alkyl having 1-12 C atoms, cycloalkyl having 4-12 C atoms, aralkyl having 7 or 8 C atoms, or unsubstituted or substituted aryl,
$R_4$ is hydrogen, alkyl having 1-12 C atoms, cycloalkyl having 4-12 C atoms, aralkyl having 7 or 8 C atoms, or unsubstituted or substituted aryl, or $R_3$ and $R_4$ together are alkylene having 3-11 C atoms,
$R_5$ and $R_6$ independently of one another are hydrogen or methyl, and
$R_7$ and $R_8$ together are alkylene having 3-11 C atoms.

2. A polyamide according to Claim 1, wherein $R_1$ is alkyl having 1-5 C atoms, $R_2$ is hydrogen or alkyl having 1-5 C atoms, $R_3$ is alkyl having 1-7 C atoms, cycloalkyl having 5-8 C atoms or unsubstituted phenyl, $R_4$ is hydrogen or alkyl having 1-5 C atoms, or $R_3$ and $R_4$ together are tetramethylene or pentamethylene, $R_5$ and $R_6$ are each hydrogen, and $R_7$ and $R_8$ together are alkylene having 4-7 C atoms.

3. A polyamide according to Claim 1 or 2, wherein $R_1$ is alkyl having 1-5 C atoms, $R_2$ is hydrogen or alkyl having 1-5 C atoms, $R_3$ is branched-chain alkyl having 3-7 C atoms or cycloalkyl having 5-8 C atoms, and $R_4$ is hydrogen, or $R_3$ and $R_4$ together are tetramethylene or pentamethylene, $R_5$ and $R_6$ are each hydrogen, and $R_7$ and $R_8$ together are alkylene having 4-7 C atoms.

4. A polyamide according to Claim 1, which polyamide consists of recurring structural elements of the formula Ia

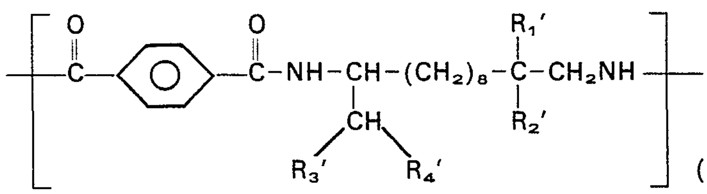

(Ia)

wherein $R_1'$ and $R_2'$ are each methyl or ethyl, or together are alkylene having 4-7 C atoms, $R_3'$ is methyl or ethyl, and $R_4'$ is alkyl having 1-4 C atoms, or $R_3'$ and $R_4'$ together are alkylene having 4-7 C atoms.

5. A polyamide according to Claim 4, wherein $R_1'$, $R_2'$, $R_3'$ and $R_4'$ are each ethyl, or wherein $R_1'$ and $R_2'$ as well as $R_3'$ and $R_4'$ together are in each case pentamethylene.

6. A process for producing a polyamide according to Claim 1, which process comprises reacting terephthalic acid, or an amide-forming derivative thereof, with a diamine of the formula III

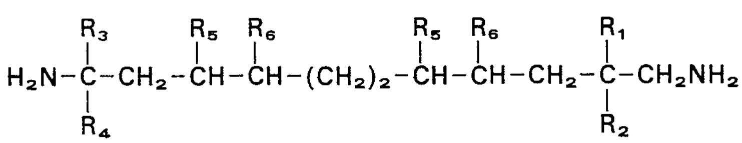

(III)

wherein $R_1$ to $R_6$ have the meanings given under the formula I, or terephthalic acid or isophthalic acid, or a mixture of terephthalic acid and isophthalic acid, or of amide-forming derivatives thereof, with a diamine of the formula IV

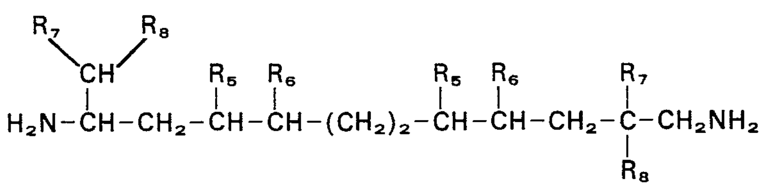

(IV)

wherein $R_5$ to $R_8$ have the meanings given under the formulae I and II.

7. A process according to Claim 6, wherein a polyamide of the type mentioned in any one of Claims 1 to 5 inclusive is produced.

8. Use of a polyamide according to Claim 1 for producing moulded articles.

**Revendications**

1. Polyamide transparent ayant une viscosité spécifique réduite, mesurée à 25° C sur une solution à 0,5% dans du m-crésol, d'au moins 0,5 dl/g, polyamide qui est constitué de motifs de formule I

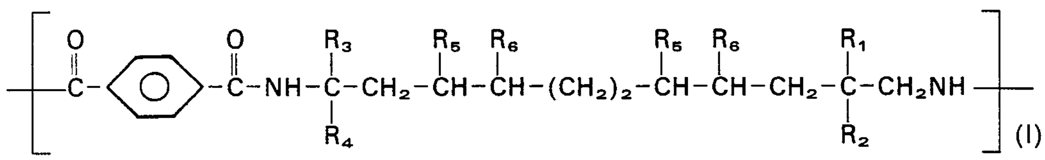
(I)

ou de motifs de formule II

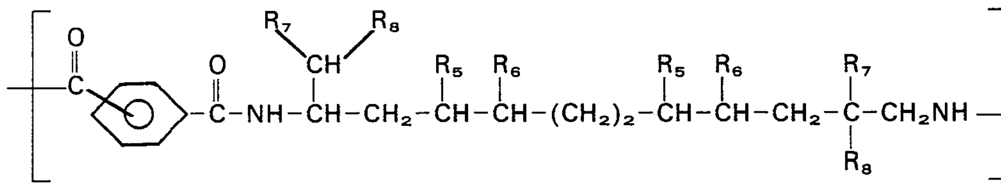
(II)

(dans cette dernière les groupes carbonyles sont en position 1,3 et/ou en position 1,4 sur le noyau benzénique), formules dans lesquelles:
$R_1$ représente un radical alkyle contenant de 1 à 12 atomes de carbone,
$R_2$ représente l'hydrogène ou un alkyle en $C_1$-$C_{12}$,
$R_3$ représente un alkyle en $C_1$-$C_{12}$, un cycloalkyle en $C_4$-$C_{12}$, un aralkyle en $C_7$ ou $C_8$ ou un aryle éventuellement substitué,
$R_4$ représente l'hydrogène, un alkyle en $C_1$-$C_{12}$, un cycloalkyle en $C_4$-$C_{12}$, un aralkyle en $C_7$ ou $C_8$ ou un aryle éventuellement substitué, ou
$R_3$ et $R_4$ forment ensemble un alkylène contenant de 3 à 11 atomes de carbone,
$R_5$ et $R_6$ représentent chacun, indépendamment l'un de l'autre, l'hydrogène ou un méthyle, et
$R_7$ et $R_8$ forment ensemble un alkylène contenant de 3 à 11 atomes de carbone.

2. Polyamide selon la revendication 1, dans lequel $R_1$ représente un alkyle en $C_1$-$C_5$, $R_2$ l'hydrogène ou un alkyle en $C_1$-$C_5$, $R_3$ un alkyle en $C_1$-$C_7$, un cycloalkyle en $C_5$-$C_8$ ou un phényle non substitué, $R_4$ l'hydrogène ou un alkyle en $C_1$-$C_5$, ou $R_3$ et $R_4$ forment ensemble un tétraméthylène ou un pentaméthylène, $R_5$ et $R_6$ représentent chacun l'hydrogène et $R_7$ et $R_8$ forment ensemble un alkylène en $C_4$-$C_7$.

3. Polyamide selon l'une des revendications 1 ou 2, dans lequel $R_1$ représente un alkyle en $C_1$-$C_5$, $R_2$ l'hydrogène ou un alkyle en $C_1$-$C_5$, $R_3$ un alkyle ramifié en $C_3$-$C_7$ ou un cycloalkyle en $C_5$-$C_8$, $R_4$ l'hydrogène, ou $R_3$ et $R_4$ forment ensemble un tétraméthylène ou un pentaméthylène, $R_5$ et $R_6$ représentent chacun l'hydrogène, et $R_7$ et $R_8$ forment ensemble un alkylène en $C_4$-$C_7$.

4. Polyamide selon la revendication 1 qui est constitué de motifs répondant à la formule Ia

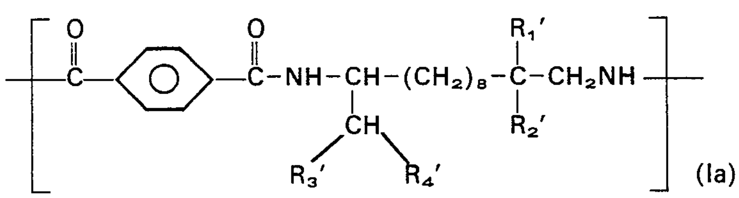
(Ia)

dans laquelle $R_1'$ et $R_2'$ représentent chacun un méthyle ou un éthyle ou forment ensemble un alkylène en $C_4$-$C_7$, $R_3'$ représente un méthyle ou un éthyle, et $R_4'$ représente un alkyle en $C_1$-$C_4$, ou $R_3'$ et $R_4'$ forment ensemble un alkylène en $C_4$-$C_7$.

5. Polyamide selon la revendication 4 dans lequel $R_1'$, $R_2'$, $R_3'$ et $R_4'$ représentent chacun un éthyle, ou $R_1'$et $R_2'$, de même que $R_3'$ et $R_4'$, forment ensemble un pentaméthylène.

6. Procédé de préparation d'un polyamide selon la revendication 1, caractérisé en ce qu'on fait réagir l'acide téréphtalique, ou un dérivé amidogène de celui-ci, avec une diamine répondant à la formule III

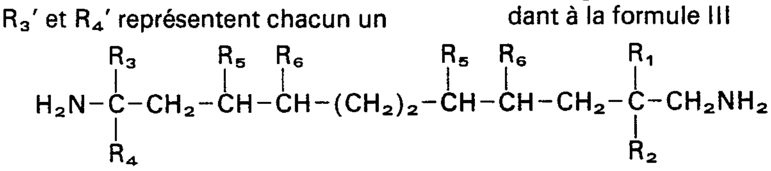
(III)

dans laquelle $R_1$ à $R_6$ ont les significations données au-dessous de la formule I, ou l'acide téréphtalique, l'acide isophtalique ou un mélange d'acide téréphtalique et d'acide isophtalique ou des dérivés amidogènes de ceux-ci, avec une diamine répondant à la formule IV

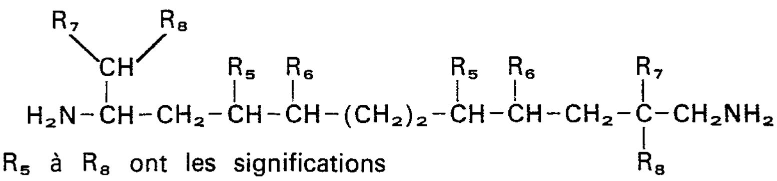

(IV)

dans laquelle $R_5$ à $R_8$ ont les significations données au-dessous des formules I et II.

7. Procédé selon la revendication 6, caractérisé en ce qu'on prépare un polyamide du type défini dans l'une des revendications 1 à 5.

8. Application d'un polyamide selon la revendication 1 pour la fabrication d'objets moulés.